# EUROPÄISCHE PATENTSCHRIFT

(11) **EP 2 986 485 B1**
(45) Veröffentlichungstag und Bekanntmachung des Hinweises auf die Patenterteilung: **13.09.2017**
(21) Anmeldenummer: 14713867.1
(22) Anmeldetag: 01.04.2014
(51) Int. Cl.: B62D 5/04, F16C 19/06, F16H 25/22, F16C 25/08, F16H 25/24

(54) **DOPPELWELLFEDER MIT DÄMPFENDER ZWISCHENSCHICHT**
DOUBLE WAVE SPRING WITH INSULATING INTERMEDIATE LAYER
DOUBLE RONDELLE ONDULÉE COMPRENANT UNE COUCHE INTERMÉDIAIRE D'AMORTISSEMENT

(30) Priorität: 15.04.2013 DE 102013006432
(43) Veröffentlichungstag der Anmeldung: 24.02.2016
(73) Patentinhaber: ThyssenKrupp Presta AG, 9492 Eschen (LI); thyssenkrupp AG, 45143 Essen (DE)
(72) Erfinder: KIMPIAN, Tibor, 1022 Budapest (HU)
(74) Vertreter: thyssenkrupp Intellectual Property GmbH
(86) Internationale Anmeldenummer: PCT/EP2014/056510
(87) Internationale Veröffentlichungsnummer: WO 2014/170125

(56) Entgegenhaltungen:
- WO-A1-2012/079726
- DE-A1-102004 034 701
- DE-A1-102010 038 715

## Beschreibung

Die vorliegende Erfindung betrifft eine Servolenkung, insbesondere für ein Kraftfahrzeug, mit einem Servomotor, der ein axial verlagerbares Bauelement über eine in einem Gestell drehbar, aber axial unverschiebbar gelagerte Mutter antreibt, nach dem Oberbegriff des Anspruchs 1.

Bei Lenkungen mit einem elektromotorischen Servoantrieb, der über einen Kugelgewindetrieb wirkt, wird die Kugelmutter entweder drehbar und axial starr im Gehäuse gelagert oder der Kugelmutter wird durch Einsatz von Federelementen und besondere Gestaltung des Gehäuses oder des Lagers eine gewisse Längs- und Kippbewegung ermöglicht. Eine sphärische Lagerung, bei der sowohl der Lagerring als auch das Gestell eine kugelige Fläche aufweisen, ist ebenfalls bekannt. Bei dieser Lösung ist der Mittelpunkt der Kugelfläche in der Mittelebene des Lagers konstruktiv festgelegt. Ähnliche Funktionen werden von Tonnenlagern und Pendelrollenlagern ermöglicht, die einen Winkelfehler der Welle zulassen. Das Ziel dieser Lagerungen ist der Toleranzausgleich, wodurch Verspannungen des Kugelgewindetriebs vermieden werden. Weiter wird die dynamische und statische Belastung der Bauteile reduziert. Es ergeben sich verbesserte akustische Eigenschaften und die Reduktion des mechanischen Spiels, das durch Wärmeausdehnung der Komponenten entsteht.

Bei der beschriebenen Lagerung zwischen Kugelflächen tritt ebenso wie bei der Verwendung von Tonnenlagern und Pendellagern das Problem auf, dass diese Lagerungen eher für Radialkräfte ausgelegt sind. Die in einem elektrisch unterstützten Lenkgetriebe an der Kugelmutter auftretenden Lasten sind jedoch bezüglich der Zahnstange oder Gewindespindel hauptsächlich axial gerichtet.

Die DE 103 10 492 A 1 beschreibt eine Servolenkung, insbesondere für Kraftfahrzeuge, mit einem als Elektromotor gebildeten Servomotor, der ein als Schubstange ausgebildetes, axial verlagerbares Bauelement über eine in einem als Lenkungsgehäuse gebildeten Gestell drehbar, aber axial unverschiebbar gelagerte Mutter antreibt. Der Servomotor, die Schubstange und die Mutter sind mittels eines exzentrischen Lagerringes derart gelagert, dass der Achsabstand zwischen der Motorwelle des Servomotors und der Schubstange variierbar ist, was eine einfache, rasche Montage der Servolenkung ermöglicht.

Aus der DE 102 02 483 A1 ist eine elektrische Lenkvorrichtung bekannt, die eine Zahnstange aufweist, die mit einer Lenkspindel verbunden ist, einen Motor zum Unterstützen einer Lenkkraft mit einem koaxial auf der Zahnstange angeordneten Rotor, einen Spindeltrieb, bei dem Kugeln zwischen einer mit dem Rotor verkeilten Mutter und einer auf der Zahnstange gebildeten Schraube eingelegt sind, und die ein Gehäuse aufweist, das insgesamt näherungsweise zylindrisch gestaltet ist. Die Mutter des Kugelumlaufspindelmechanismus ist drehbar in einem Lager im Inneren des Muttergehäuseabschnittes gelagert.

In der DE 1947337 U ist ein elastisches Wälzlager dargestellt, welches eine axiale Beweglichkeit und eine axiale Federung mit Rückstellkraft aufweist. Ein Wälzlager mit einem Lageraußenring und einem Lagerinnenring, wobei der Lageraußenring und /oder der Lagerinnenring jeweils zwischen mindestens einem Dämpfungselement angeordnet ist, ist aus der DE 10 2004 034 701 A1 bekannt.

Die EP 1 571 067 A1 offenbart die elastische Lagerung einer Schneckenwelle die koaxial die Motorweile eines Servomotors umgreift.

Die gattungsgemäße EP 2 049 383 A1 zeigt eine Lösung, um die Schwenkbarkeit des Radiallagers zu ermöglichen bzw. zu verbessern. Es ist vorgesehen, eine konvexe Wölbung an dem Außenumfang des Außenrings vorzusehen oder die Mutter, auf der der Innenring sitzt, mit einer konvexen Wölbung zu versehen. aufweist. Durch die konvexe Wölbung des Außenumfangs des Außenrings oder der Mutter soll eine Freistellung des Radiallagers und eine Verschwenkbarkeit der Mutter und des axial verlagerbaren Bauelements erreicht werden. An jeder Stirnseite des Radiallagers ist ein Stahlring mit einem aufvulkanisierten Element mit elastomeren Eigenschaften vorgesehen, welches bei wechselnden Lasten eine axiale und radiale Dämpfung sowie die Durchführung und Dämpfung der Schwenkbewegung des axial verlagerbaren Bauelements ermöglichen soll. Bei Biegemomentbeanspruchung des axial verlagerbaren Bauelements soll ein Verspannen des Systems vermieden werden. Die Herstellung der verwendeten Bauelemente und die Montage der Bauelemente sind aufwändig. Weiterhin ist im Stand der Technik eine wünschenswerte große Dämpfung der Lagerung bei geringer Einbauhöhe nicht offenbart.

Aus der DE 10 2009 019 856 A1 ist eine Tellerfederanordnung bekannt, bei der zumindest zwei geschichtete Tellerfedern ein Tellerpaket bilden, wobei zwischen den geschichteten Tellerfedern eine elastische Zwischenschicht angeordnet ist, die eine Relativbewegung der beiden durch die Zwischenschicht getrennten Tellerfedern mittels Scherung ermöglicht. Durch das parallele Koppeln der Federn kann eine Kraftsteigerung erreicht werden, dabei sind die Federn vorzugsweise reibungsfrei elastisch gekoppelt. Die WO2012/079726 A1 beschreibt die Merkmale des Oberbegriffs des unabhängigen Anspruchs 1. Der Erfindung liegt daher die Aufgabe zugrunde, eine Servolenkung mit einer verkippbaren Lagerung der Kugelmutter zu schaffen, die mit einfacheren Bauelementen realisierbar ist, die einfach zu montieren ist und deren Dämpfung der Lagerung eine große Dämpfung bei geringer Einbauhöhe aufweist.

Diese Aufgabe wird mit einer Servolenkung mit den Merkmalen des Anspruchs 1 gelöst. Weil bei einer Servolenkung, insbesondere für ein Kraftfahrzeug, mit einem Servomotor, der ein axial verlagerbares Bauelement über eine in einem Gestell drehbar in einem Lager gelagerte Mutter antreibt, wobei die Mutter mit einer an dem Bauelement ausgebildeten Gewindespindel in Eingriff steht und über das Lager in Axialrichtung mittels Federelementen elastisch gegenüber dem Gestell sowie in Radialrichtung entlang einer schmalen umlaufenden Kontaktfläche an dem Gestell abgestützt ist, wobei die Federelemente als Wellfederpakete ausgebildet sind, wobei die Wellfederpakete jeweils wenigstens zwei Elemente aufweisen, wovon wenigstens ein Element eine Wellfeder ist, wobei jeweils zwischen den wenigstens zwei Elementen eine elastische Zwischenschicht angeordnet ist, werden zugleich mehrere Vorteile erreicht. Es wird eine axiale Ausweichbewegung der Kugelmutter unter Last ermöglicht, ebenso eine Verkippung der Kugelmutter, jeweils innerhalb konstruktiv definierter Grenzen. Weiter werden die genannten Bewegungen durch die Zwischenschicht gedämpft, da diese Energie verzehrt. Schließlich wird am Ende des Verformungsweges der Wellfeder eine Anschlagsdämpfung erzielt, da die metallische Wellfeder nicht unmittelbar am Gestell oder der zugeordneten Anlaufscheibe anschlagen kann, sondern an der Zwischenschicht.

Wenn zwischen den Wellfederpaketen und dem Gestell jeweils eine Anlaufscheibe eingelegt ist, muss das Material des Wellfederpakets nicht an das Material des Gestells angepasst sein. Eine besonders gute Wirkung der Federung ergibt sich, wenn die Wellfederpakete jeweils zwischen einem Außenring des Lagers und einem Ringbund des Gestells angeordnet sind.

Eine einfache Montage des gesamten Lenkgetriebes wird ermöglicht, wenn das Gestell ein Gehäuse und einen Gehäusedeckel umfasst, wobei einer der Ringbunde an dem Gehäusedeckel ausgebildet ist und wobei der andere Ringbund an dem Gehäuse oder an einer in das Gehäuse einführbaren Hülse ausgebildet ist.

Die Freiheit der Lagerung gegenüber einer Kippbewegung unter Last wird verbessert, wenn die Hülse neben dem Ringbund auch einen Lagersitz aufweist, der den Lageraußenring des Lagers an einer äußeren Umfangsfläche hält und/oder wenn der Lagersitz mit dem Lageraußenring eine Anlagefläche bildet, die in Axialrichtung der Anordnung schmaler als der Lageraußenring selbst ist. in einer besonders einfachen Ausführung kann dabei die Anlagefläche als umlaufende Rippe ausgeführt sein. Es kann aber auch vorgesehen sein, dass die Anlagefläche linienförmig als Teilbereich einer konvexen, nach innen zu dem Lager weisenden Oberfläche des Lagersitzes ausgebildet ist.

Vorteilhaft weisen die Wellfederpakete jeweils zwei Wellfedern auf, wobei zwischen den zwei Wellfedern eine elastische Zwischenschicht angeordnet ist. Das Paket ist vorteilhaft einteilig ausgebildet.

Es kann auch vorgesehen sein, dass die Wellfederpakete jeweils eine Wellfeder und einen Ring aufweisen, wobei zwischen der Wellfeder und dem Ring eine elastische Zwischenschicht angeordnet ist und wobei die Wellfeder mit ihren Tiefpunkten mit dem Ring in Anlage steht. Besonders gute Dämpfungseigenschaften ergeben sich, wenn die Wellfeder in ihren Tiefpunkten wenigstens einen radial durchsetzenden Ausschnitt aufweist.

Nachfolgend werden Ausführungsbeispiele der Erfindung anhand der Zeichnung näher beschrieben. Gleiche oder gleichwirkende Bauelemente tragen gleiche Bezugsziffern. Es zeigen:
- Fig. 1:: die Lagerung einer Kugelmutter in einem Lenkungsgehäuse mit axialer Abstützung gegen das Gehäuse und gegen den Gehäusedeckel,
- Fig . 2:: die axiale Abstützung des Lagers in einer eingesetzten Hülse mit konvexer Gestaltung des äußeren Lagersitzes,
- Fig. 3:: eine Anordnung entsprechend Fig. 2 mit einer umlaufenden Rippe zur radialen Abstützung des Lageraußenrings,
- Fig. 4:: ein Wellfederpaket in Seitenansicht,
- Fig. 5:: das Wellfederpaket aus Fig. 4 in räumlicher Darstellung,
- Fig. 6:: das Wellfederpaket aus Fig. 4 und Fig. 5 in Längsansicht entlang der Linie B-B aus Fig. 4,
- Fig. 7:: eine zweite Ausführungsform des Wellfederpakets in Seitenansicht,
- Fig. 8:: das Wellfederpaket aus Fig. 7 in räumlicher Darstellung,
- Fig. 9:: das Wellfederpaket aus Fig. 7 und Fig. 8 in vergrößerter Darstellung des Ausschnitts C aus Fig. 7,
- Fig. 10:: eine weitere Ausführungsform des Wellfederpakets in Seitenansicht,
- Fig. 11:: das Wellfederpaket aus Fig. 10 in räumlicher Darstellung, sowie
- Fig. 12:: das Wellfederpaket aus Fig. 10 und Fig. 11 in vergrößerter Darstellung des Ausschnitts D aus Fig. 10.

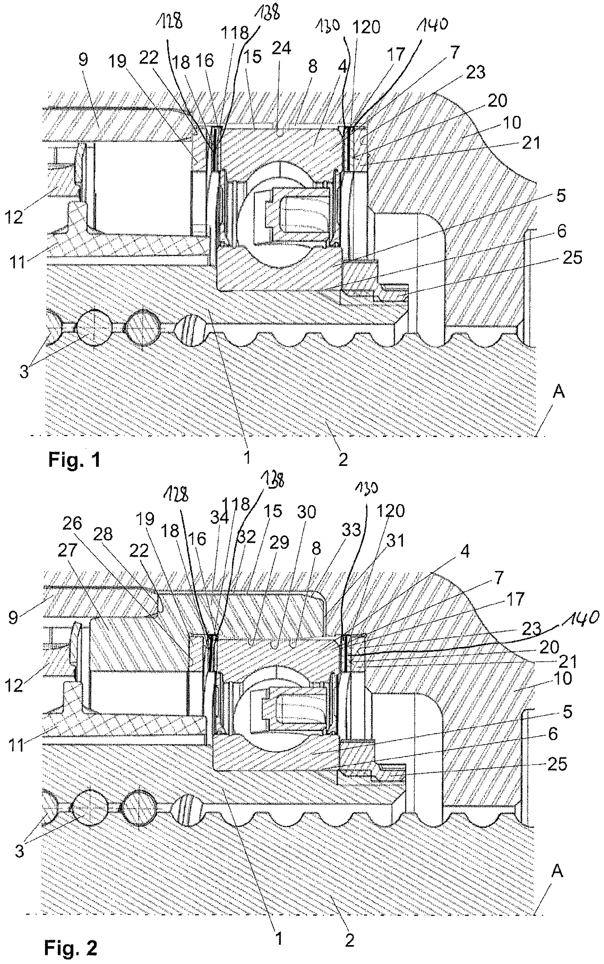

In der Fig. 1 ist ein Ausschnitt aus einer elektrisch angetriebenen Kraftfahrzeugservolenkung in einem Längsschnitt dargestellt. Der Ausschnitt zeigt die obere Hälfte eines Längsschnitts entlang der Symmetrieachse A in einem Bereich, in dem eine Kugelmutter 1 mit einer Gewindespindel 2 in Eingriff steht. Zwischen der Kugelmutter 1 und der Gewindespindel 2 sind Kugeln 3 eines Kugelumlaufs in an sich bekannter Weise angeordnet. Die Kugelmutter 1 ist in einem Lager 4 drehbar gelagert. Das Lager 4 weist einen Innenring 5 auf, der fest auf einem Lagersitz 6 der Kugelmutter 1 sitzt. Das Lager 4 weist weiter einen Außenring 7 auf, der in einem Lagersitz 8 eines Gestells angeordnet ist. Das Gestell umfasst bei dieser Ausführungsform ein in diesem Bereich etwa rohrförmig ausgebildetes Lenkungsgehäuse 9, welches von einem Gehäusedeckel 10 verschlossen ist. Der Gehäusedeckel 10 umgreift das Lenkungsgehäuse 9 an seiner Außenseite und wird mittels nicht dargestellter Befestigungsmittel an dem Lenkungsgehäuse 9 befestigt.

Die Kugelmutter 1 trägt weiter eine Zwischenhülse 11, auf der eine Riemenscheibe 12 eines Zahnriemenantriebs drehfest befestigt ist. Im Zusammenhang der vorliegenden Erfindung ist die Aufnahme des Lageraußenrings 7 in dem Lagersitz 8 und insbesondere die Abstützung in Axialrichtung der Längsachse A von Bedeutung. Diese wird nachfolgend näher beschrieben.

Der Lageraußenring 7 ist, wie bei Wälzlagern üblich, mit einer äußeren Umfangsfläche 15, einer ersten Stirnseite 16 und einer zweiten Stirnseite 17 versehen. An der ersten Stirnseite 16 liegt ein Wellfederpaket 18 an, das sich gegen eine Anlaufscheibe 19 abstützt. Entsprechend stützt sich die zweite Stirnseite 17 gegen ein Wellfederpaket 20 ab, das wiederum sich in Axialrichtung der Längsachse A gegen eine Anlaufscheibe 21 abstützt. Die Wellfederpakete 18 und 20 weisen jeweils zwei Wellfedern 128, 138, 130, 140 auf, zwischen denen eine elastische Zwischenschicht 118, 120 angeordnet ist. Die Wellfedern 128, 138, 130, 140 sind ringförmige Federn, die einen etwa gleichförmigen Radius aufweisen, der vorzugsweise mit dem Radius des Lageraußenrings 7 übereinstimmt. Die Wellfedern 128, 138, 130, 140sind nicht eben, sondern weisen in der Seitenansicht entsprechend Fig. 1 eine wellenförmige Gestalt auf. Diese wellenförmige Gestalt erlaubt es, die Wellfedern 128, 138, 130, 140in Axialrichtung zwischen dem Lageraußenring 7 und den Anlaufscheiben 19 bzw. 21 zu komprimieren. Dabei tritt eine elastische Verformung ein, die reversibel ist und im Ruhezustand den Lageraußenring 7, wie in der Figur 1 dargestellt ist, mittig zwischen den Anlaufscheiben 19 und 21 positioniert. Die Wellfederpakete 18 und 20 sind also Bauteile, die auch durch hohe Last in Axialrichtung nicht zerstört werden. Durch die elastische Zwischenschicht, die vorzugsweise ein auf Kautschuk basierendes Elastomer oder ein viskoelastischer Stoff ist, wird eine Relativbewegung der durch die Zwischenschicht getrennten Wellfedern 128, 138, 130, 140 mittels Scherung ermöglicht. Diese Scherung erzeugt zusätzlich zu den gekoppelten Federelementen eine Dämpfung der beaufschlagten Kraft in Axialrichtung. Die Anlaufscheiben 19 und 21 sind Stahlringe, die vorzugsweise gehärtet sind. Diese Stahlringe sind geeignet, die im Betrieb geringfügige Bewegung der Wellfederpakete 18 und 20 aufzunehmen, ohne dass sich die ebenfalls aus hartem Material gefertigten Wellfedern in die Anlaufscheiben 19 und 21 einarbeiten. Die Anlaufscheiben 19 und 21 sind deshalb besonders vorteilhaft dann einzusetzen, wenn das Gestell (hier das Lenkungsgehäuse 9 und der Gehäusedeckel 10) aus einer Leichtmetalllegierung oder einem ähnlichen, relativ weichen Material gefertigt ist.

Die dargestellte Konstruktion sieht vor, dass die Anlaufscheibe 19 unmittelbar an einer Stirnseite 22 des Lenkungsgehäuses 9 anliegt. Die zweite Anlaufscheibe 21 liegt entsprechend an einem Ringbund 23 des Gehäusedeckels 10 an, der im eingebauten Zustand der Stirnseite 22 in einem Abstand gegenüber liegt. In Radialrichtung stützt sich der Lageraußenring 7 mit seiner äußeren Umfangsfläche 15 an einem Steg 24 ab, der umlaufend in dem Lagersitz 8 ausgebildet ist. Der Steg 24 bildet mit dem Lageraußenring 7 eine schmale, ringförmig umlaufende Anlagefläche, die ein Verkippen des Lageraußenrings 7 gegenüber dem Lagersitz 8 im geringen Umfang ermöglicht.

Schließlich ist der Lagerinnenring 5 in seinem Lagersitz 6 durch eine Gewindemutter 25 gesichert, die auf ein entsprechendes Gewinde der Mutter 1 aufgeschraubt ist.

Zur Montage wird zunächst die Baugruppe montiert, die mit der Mutter 1 drehfest ist. Diese Baugruppe umfasst die Hülse 11 und die Riemenscheibe 12 sowie das Lager 4. Diese Baugruppe wird dann mit dem Wellfederpaket 18 und der Anlaufscheibe 19 zusammen in das Lenkungsgehäuse 9 eingeführt, bis die Anlaufscheibe 19 auf der Stirnseite 22 des Lenkungsgehäuses 9 aufliegt. Die Gewindespindel 2 kann vor oder nach diesem Montagevorgang in die Mutter 1 eingespindelt werden. Danach werden das Wellfederpaket 20 und die Anlaufscheibe 21 auf den Lageraußenring 7 aufgelegt und der Gehäusedeckel 10 wird aufgesetzt und in einem nicht dargestellten Flanschbereich an dem Gehäuse 9 befestigt.

Im Betrieb kann nun ein elektrischer Servomotor über einen Riementrieb die Riemenscheibe 12 und damit die Mutter 1 in Drehung versetzen, wodurch über die Kugeln 3 die Gewindespindel 2 in eine Axialbewegung versetzt wird, die letztlich die Lenkbewegung für das Kraftfahrzeug bewirkt. Die Kugelmutter 1 kann sich in dem Lagersitz 8 in der beschriebenen Weise in Axialrichtung gegen die Rückstellkraft der Wellfederpakete 18 und 20 bewegen. Die schmale Anlagefläche im Bereich des Stegs 24 erlaubt auch eine leichte Kippbewegung. Dadurch können dynamische Belastungen aufgefangen werden, die ohne diese spezielle Lagerung zu einer hohen Belastung der Mutter 1 und der Gewindespindel 2 im Bereich der Kugeln 3 führen würde.

Eine andere Ausführungsform der Erfindung ist in Figur 2 dargestellt. Das Lager 4 ist bei der Ausführungsform gemäß Fig. 2 kleiner ausgelegt. Sein äußerer Lagerring 7 stützt sich wie in der Fig. 1 in Axialrichtung nach rechts über das Wellfederpaket 20 und die Anlaufscheibe 21 gegen den Ringbund 23 des Gehäusedeckels 10 ab. In der entgegengesetzten Axialrichtung stützt sich der Lageraußenring 7 mit seiner Stirnseite 16 über das Wellfederpaket 18 und die Anlaufscheibe 19 gegen einen Ringbund 26 ab, der in einer Hülse 27 ausgebildet ist. Die Hülse 27 ist ein im Wesentlichen rohrförmiges Bauteil, das in mehrere Abschnitte gegliedert ist, die nachfolgend beschrieben werden.

Die Hülse 27 weist einen inneren Durchmesser auf, der so groß ist, dass die Kugelmutter, die Zwischenhülse 11 und die Gewindemutter 25 durch die Hülse 27 geführt werden können. Ein erster Abschnitt, der in der Fig. 2 links dargestellt ist, weist einen Außendurchmesser auf, der dem Innendurchmesser des Lenkungsgehäuses 9 entspricht. Die Hülse 27 kann mit diesem Abschnitt in das Lenkungsgehäuse 9 eingeführt werden. Anschließend an diesen Abschnitt erweitert sich der Außendurchmesser der Hülse 27 in einem Ringbund 28, so dass der Ringbund 28 an der Stirnseite 22 des Lenkungsgehäuses 9 anliegen kann. Der in einem weiteren Abschnitt vergrößerte Außendurchmesser der Hülse 27 entspricht etwa dem Außendurchmesser des Lenkungsgehäuses 9 und dem Innendurchmesser des Deckels 10 in diesem Bereich, wobei zwischen der Hülse 27 und dem Gehäusedeckel 10 ein Spalt vorgesehen ist.

Bei dem Ringbund 26 in Fig. 2, an dem die Anlaufscheibe 19 anliegt, vergrößert sich der Innendurchmesser der Hülse 27 von einem Wert, der dem Innendurchmesser der Anlaufscheibe 19 entspricht, auf einen Innendurchmesser, der größer als derjenige der Anlaufscheibe 19 und auch größer als derjenige des Wellfederpakets 18 ist. Das Wellfederpaket 18 und die Anlaufscheibe 19 können also in die Hülse 27 eingeführt werden, bis sie an dem Ringbund 26 anliegen. Der Außendurchmesser der Hülse 27 bleibt in diesem Bereich unverändert. An einer Stelle, die in Axialrichtung der Symmetrieachse A etwa mit der Position der linken Stirnseite 16 des Lageraußenrings 7 zusammenfällt, schließt ein nach innen konvexer Bereich 29 der Hülse 27 an. Der Bereich 29 ist in der Weise konvex oder ballig ausgeführt, dass in einer durchgehend konvexen Krümmung der Radius ausgehend von dem größeren Radius im Bereich der Wellfeder 18 sich kontinuierlich verkleinert bis hin zu einem minimalen Radius 30, um danach wieder zuzunehmen, etwa bis auf den Wert des größeren Innendurchmessers im Bereich des Wellfederpakets 18. Dieser konvexe Bereich 29 endet dort, wo auch die Hülse 27 endet. Dort ist eine Stirnseite 31 ausgebildet, die flach und eben senkrecht zu der Achse A orientiert ist. Die Außenseite der Hülse 27 weist einen rein kreiszylindrischen Abschnitt 34 auf, der mit konstantem Durchmesser in einem geringen Abstand 32 von dem Gehäusedeckel 10 verläuft und der sich mit einer Montageschräge 33 zu der Stirnfläche 31 hin verjüngt.

Der Innendurchmesser der Hülse 27 im Bereich des kleinsten Radius 30 des konvexen Bereichs 29 entspricht dem Außendurchmesser des Lageraußenrings 7. Da der Lageraußenring 7 an seiner Außenseite geometrisch einem Kreiszylinder mit konstantem Durchmesser entspricht, ist die Anlagefläche des Lageraußenrings 7 an dem konvexen Bereich 29 in der dargestellten Position nahezu linienförmig. Unter Last kann sich der Lageraußenring 7 und mit ihm das Lager 4 sowie die gesamte Anordnung aus Kugelmutter 1, Kugeln 3 und Gewindespindel 2 gegen die Rückstellkraft der Wellfederpakete 18 und 20 in Richtung der Achse A bewegen. Der Lageraußenring 7 kann aber auch auf Grund der linienförmigen Anlage an dem konvexen Bereich 29 in beschränktem Umfang verkippt werden. Es ist deshalb gewährleistet, dass dynamische Belastungen auf die Mutter 1 durch eine gewisse Beweglichkeit des Lagers 4 in ihren Belastungsspitzen neutralisiert werden können.

Die Ausführungsform gemäß Fig. 2 hat gegenüber der Ausführung aus Fig. 1 den Vorteil, dass das Lager 4 kleiner dimensioniert werden kann und dass vor allen Dingen durch die Hülse 27 die gesamte Baugruppe weiter vormoniert werden kann. Insbesondere kann die Hülse 27 vor dem Einsetzen in das Lenkungsgehäuse 9 bereits das Wellfederpaket 18 und die Anlaufscheibe 19 sowie das Lager 4 mit der darin montierten Mutter 1 und gegebenenfalls der bereits eingespindelten Gewindespindel 2 aufnehmen. Das Einsetzen der Hülse 27 in das Lager 9 ist einfacher als die Montage der Ausführungsform nach Fig. 1. Der Montagevorteil überwiegt in vielen Fällen den erhöhten Aufwand für die Anfertigung der Hülse 27. Alternativ ist es denkbar und möglich, dass die Hülse 27 mit dem Abschnitt 34 in den Gehäusedeckel eingepresst ist, der Abstand 32 entsprechend nicht vorhanden ist oder mit dem entsprechenden Presssitz ausgelegt ist. Auf diese Weise kann in dieser alternativen Ausführungsform das Paket aus Lager 4 und den Wellfederpaketen 18, 20 sowie den Anlaufscheiben 19 als vormontierte Baugruppe mit den restlichen Teilen der Kraftfahrzeugservolenkung verbaut werden. Eine vereinfachte Ausführungsform sieht vor, dass die Hülse 27 aus einer harten oder gehärteten Stahllegierung gefertigt ist. Bei dieser Ausführungsform, die nicht dargestellt ist, kann die Anlaufscheibe 19 entfallen, so dass sich das Wellfederpaket 18 unmittelbar gegen den Ringbund 26 der Hülse 27 abstützen kann. Bei geeigneter Materialwahl besteht nicht die Gefahr, dass sich das Wellfederpaket 18 mit der Zeit in das Material der Hülse 27 einarbeitet. Das Lenkungsgehäuse 9 und der Gehäusedeckel 10 können wie oben beschrieben aus einer Leichtmetalllegierung oder auch aus einem geeigneten Kunststoff gefertigt werden.

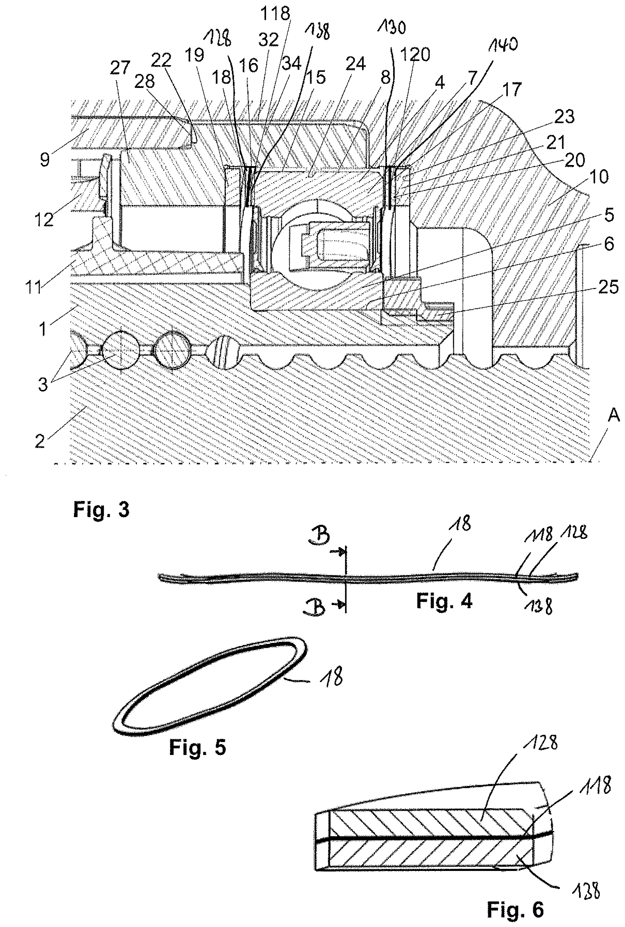

Die Fig. 3 zeigt eine dritte Ausführungsform der vorliegenden Erfindung, bei der abweichend von Fig. 1 eine Hülse 27 zur Montage des Lagers 4 in dem Lenkungsgehäuse 9 vorgesehen ist. Insoweit entspricht diese Ausführungsform der in Fig. 2 dargestellten Ausführungsform. Abweichend von Fig. 2 weist die Hülse 27 im Bereich des Lagersitzes 8 des Lagers 4 einen nach innen weisenden umlaufenden Steg 24 auf. Insoweit entspricht die Ausführungsform gemäß Fig. 3 im Bereich des Lagersitzes 8 der Ausführungsform, die zu Fig. 1 beschrieben wurde. Die Montagevorteile auf Grund der Hülse 27 ergeben sich auch bei der Ausführungsform aus Fig. 3. Der Lagersitz 8 mit dem umlaufenden Steg 24 ist jedoch einfacher zu fertigen als der in Fig. 2 dargestellte konvexe Bereich im Bereich des Lagersitzes. Der Steg 24 ist hinreichend schmal dimensioniert, um auch hier ein leichtes Kippen des Lagers 4 zu erlauben, wenn eine äußere dynamische Belastung dies erfordert.

Die Figuren 4 bis 12 zeigen drei unterschiedliche Ausführungsformen der Wellfederpakete 18 und 20.

In den Figuren 4 bis 6 ist ein Wellfederpaket 18, aufweisend zwei parallel zueinander angeordnete Wellfedern 128, 138 und eine dazwischen liegende elastomere oder viskoelastische Zwischenschicht 118, in unterschiedlichen Darstellungen gezeigt. Die parallel angeordneten Wellfedern 128, 138 stimmen in etwa in ihrem Durchmesser, ihrer Breite und ihrer Dicke überein. Sie sind deckungsgleich. Die zwischen den Wellfedern angeordnete Zwischenschicht 118 weist die gleiche Breite auf. Die Dicke der Zwischenschicht 118 beträgt etwa ein Siebtel der Höhe der Wellfedern 128, 138.

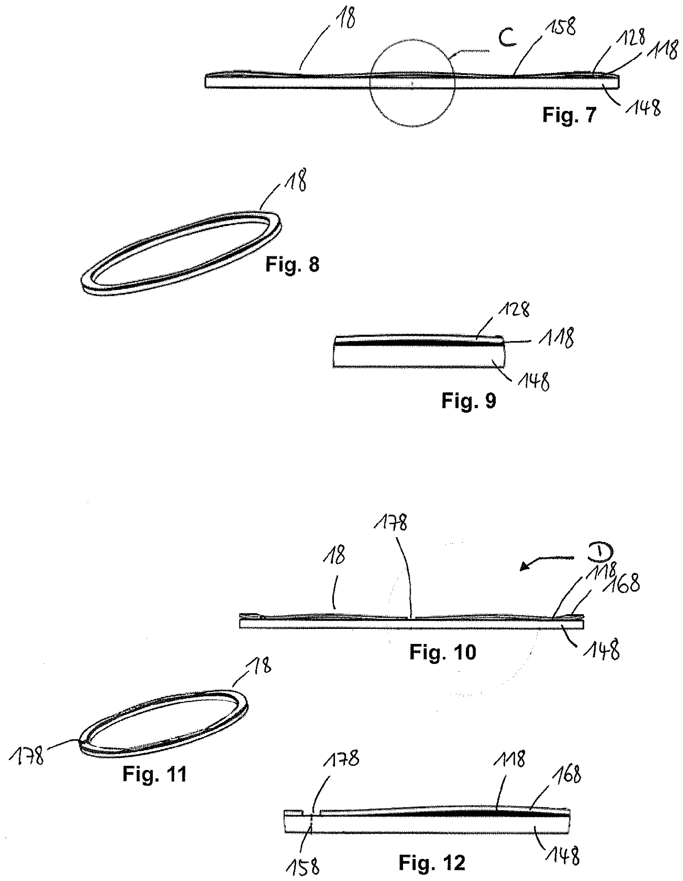

Eine zweite Ausführungsform der Wellfederpakete 18 und 20 ist in den Figuren 7 bis 9 in unterschiedlichen Darstellungen gezeigt. Das Wellfederpaket 18 weist hier eine Wellfeder 128 und einen flachen Ring 148 auf, zwischen denen eine viskoelastische oder elastomere Zwischenschicht 118 vorgesehen ist. Die Wellfeder 128 und der Ring 148 stimmen in ihrem Durchmesser und ihrer Breite überein. Die Wellfeder 128 und der Ring 148 sind konzentrisch angeordnet. Die Dicke des Rings 148 ist dabei in etwa sechsmal größer als die Dicke der Wellfeder 128. Die Zwischenschicht 118 weist die gleiche Breite und den gleichen Durchmesser wie der Ring 148 und die Wellfeder 128 auf. Die Dicke der Zwischenschicht 118 entspricht dabei im Mittel in etwa der Dicke der Wellfeder 128. Die Wellfeder 128 ist dabei so angeordnet, dass ihre Tiefpunkte 158 in Anlage mit dem Ring 148 stehen. Durch Biegen der Wellfeder 128 entstehen im Betrieb Schubspannungen im Elastomer, was einen Energieverzehr und damit eine dämpfende Wirkung zur Folge hat.

Die Figuren 10 bis 12 zeigen die dritte Ausführungsform der Wellfederpakete 18 und 20. Das Wellfederpaket 18 weist hier eine Wellfeder 168 und einen flachen Ring 148 auf, zwischen denen eine viskoelastische oder elastomere Zwischenschicht 118 angeordnet ist. Die Wellfeder 168 und der Ring 148 stimmen in ihrem Durchmesser und ihrer Breite überein. Die Höhe des Rings 148 ist dabei in etwa sechsmal größer als die Höhe der Wellfeder 168. Die Wellfeder 128 und der Ring 148 sind konzentrisch aufeinander angeordnet. Die Zwischenschicht 118 weist die gleiche Breite und den gleichen Durchmesser wie der Ring 148 und die Wellfeder 168 auf. Die Dicke der Zwischenschicht 118 entspricht dabei in etwa der Dicke der Wellfeder 168. Die Wellfeder 168 weist an wenigstens einem Tiefpunkt, bevorzugt an allen ihren Tiefpunkten 158 jeweils einen in Radialrichtung durchsetzenden Ausschnitt 178 auf. Wenn wenigstens zwei Ausschnitte 178 vorgesehen sind, ist die Wellfeder 168 dadurch mehrteilig ausgebildet. Die Ausschnitte 178 ermöglichen eine Ausdehnung der Wellfeder 168 in radialer Richtung. Hierdurch entstehen Schubspannungen im Elastomer, die eine dämpfende Wirkung zur Folge haben.

Es versteht sich, dass die genannten Dimensionen der Wellfedern, der Zwischenschicht und des Rings je nach Bedarf dimensioniert werden und somit von den hier genannten Relationen abweichen können.

Nur vorsorglich soll erwähnt werden, dass die rotierenden Bauteile sowie die Hülse und die Innenbereiche des Lenkungsgehäuses 9 und des Gehäusedeckels 10 sowie die Hülse 27 im Wesentlichen rotationssymmetrisch zu der Längsachse A ausgebildet sind. Die Hülse 27 kann insbesondere als Drehteil gefertigt sein.

In allen Ausführungsformen ist es denkbar und möglich, die in Reibkontakt stehenden Oberflächen mit reibungsvermindernden Oberflächen zu versehen.

Die erfindungsgemäße Dämpfung der Lagerung der Kugelmutter weist durch die Wellfederpakete eine hohe Steifigkeit in Verbindung mit einer vorteilhaften Dämpfung, gegeben durch die elastische Zwischenschicht, bei sehr geringer Bauhöhe auf.

## Patentansprüche

1. Servolenkung, insbesondere für ein Kraftfahrzeug, mit einem Servomotor, der ein axial verlagerbares Bauelement über eine in einem Gestell (9, 10) drehbar in einem Lager (4) gelagerte Mutter (1) antreibt, wobei die Mutter (1) mit einer an dem Bauelement ausgebildeten Gewindespindel (2) in Eingriff steht und über das Lager (4) in Axialrichtung mittels Federelementen (18, 20) elastisch gegenüber dem Gestell (9, 10) sowie in Radialrichtung entlang einer schmalen umlaufenden Kontaktfläche (8, 30) an dem Gestell (9, 10) abgestützt ist, **dadurch gekennzeichnet, dass** die Federelemente (18, 20) als Wellfederpakete (18, 20) ausgebildet sind, wobei die Wellfederpakete (18, 20) jeweils wenigstens zwei Elemente aufweisen, wovon wenigstens ein Element eine Wellfeder (128, 130) ist, wobei jeweils zwischen den wenigstens zwei Elementen eine elastische Zwischenschicht (118,120) angeordnet ist.

2. Servolenkung nach Anspruch 1, **dadurch gekennzeichnet, dass** zwischen den Wellfederpaketen (18, 20) und dem Gestell (9, 10) jeweils eine Anlaufscheibe (19, 21) eingelegt sind.

3. Servolenkung nach einem der vorhergehenden Ansprüche, **dadurch gekennzeichnet, dass** die Wellfederpakete (18, 20) jeweils zwischen einem Außenring (7) des Lagers (4) und einem Ringbund (22, 23, 26) des Gestells (9, 10) angeordnet sind.

4. Servolenkung nach Anspruch 3, **dadurch gekennzeichnet, dass** das Gestell ein Gehäuse (9) und einen Gehäusedeckel (10) umfasst, wobei einer der Ringbunde (23) an dem Gehäusedeckel (10) ausgebildet ist und wobei der andere Ringbund (22, 26) an dem Gehäuse (9) oder an einer in das Gehäuse (9) einführbaren Hülse (27) ausgebildet ist.

5. Servolenkung nach Anspruch 4, **dadurch gekennzeichnet, dass** die Hülse (27) neben dem Ringbund (26) auch einen Lagersitz (8) aufweist, der den Lageraußenring (7) des Lagers (4) an einer äußeren Umfangsfläche (15) hält.

6. Servolenkung nach einem der vorhergehenden Ansprüche, **dadurch gekennzeichnet, dass** der Lagersitz (8) mit dem Lageraußenring (7) eine Anlagefläche bildet, die in Axialrichtung (A) der Anordnung schmaler als der Lageraußenring (7) selbst ist.

7. Servolenkung nach Anspruch 6, **dadurch gekennzeichnet, dass** die Anlagefläche als umlaufende Rippe (24) ausgeführt ist.

8. Servolenkung nach Anspruch 6, **dadurch gekennzeichnet, dass** die Anlagefläche linienförmig als Teilbereich (30) einer konvexen, nach innen zu dem Lager (4) weisenden Oberfläche (29) des Lagersitzes (8) ausgebildet ist.

9. Servolenkung nach einem der vorhergehenden Ansprüche, **dadurch gekennzeichnet, dass** die Wellfederpakete (18, 20) jeweils zwei Wellfedern (128, 138, 130, 140) aufweisen, wobei zwischen den zwei Wellfedern eine elastische Zwischenschicht (118, 120) angeordnet ist.

10. Servolenkung nach einem der vorhergehenden Ansprüche 1 bis 8, **dadurch gekennzeichnet , dass** die Wellfederpakete (18, 20) jeweils eine Wellfeder (128, 130, 168) und einen Ring (148) aufweisen, wobei zwischen der Wellfeder (128, 130) und dem Ring (148) eine elastische Zwischenschicht (118, 120) angeordnet ist und wobei die Wellfeder (128, 130) mit ihren Tiefpunkten (158) mit dem Ring (148) in Anlage steht.

11. Servolenkung nach Anspruch 10, **dadurch gekennzeichnet, dass** die Wellfeder (168) in ihren Tiefpunkten (158) wenigstens einen radial durchsetzenden Ausschnitt (178) aufweist.

## Claims

1. Power steering system, especially for a motor vehicle, with a servomotor, which drives an axially movable component via a nut (1) mounted in a bearing (4) in a rotatable manner in a frame (9, 10), wherein the nut (1) is engaged with a threaded spindle (2) formed on the component and is supported axially by the bearing (4) in an elastic manner relative to the frame (9, 10) by means of elastic elements (18, 20) and radially on the frame (9, 10) along a narrow circumferential contact surface (8, 30), **characterized in that** the elastic elements (18, 20) are designed as wave spring assemblies (18, 20), wherein each wave spring assembly (18, 20) has at least two elements, at least one element of which is a wave spring (128, 130), and an elastic intermediate layer (118, 120) is arranged between each of the at least two elements.

2. Power steering system according to Claim 1, **characterized in that** a thrust washer (19, 21) is installed each time between the wave spring assemblies (18, 20) and the frame (9, 10).

3. Power steering system according to one of the preceding claims, **characterized in that** the wave spring assemblies (18, 20) are arranged each time between an outer race (7) of the bearing (4) and a collar (22, 23, 26) of the frame (9, 10).

4. Power steering system according to Claim 3, **characterized in that** the frame comprises a housing (9) and a housing cover (10), wherein one of the collars (23) is formed on the housing cover (10) and the other collar (22, 26) is formed on the housing (9) or on a sleeve (27) which can be inserted into the housing (9).

5. Power steering system according to Claim 4, **characterized in that** the sleeve (27) also has a bearing seat (8) in addition to the collar (26), which holds the outer race (7) of the bearing (4) against an outer circumferential surface (15).

6. Power steering system according to one of the preceding claims, **characterized in that** the bearing seat (8) forms with the outer race (7) a bearing surface which is more narrow in the axial direction (A) of the arrangement than the outer race (7) itself.

7. Power steering system according to Claim 6, **characterized in that** the bearing surface is configured as an encircling rib (24).

8. Power steering system according to Claim 6, **characterized in that** the bearing surface is linear as part (30) of a convex surface (29) of the bearing seat (8) facing inward to the bearing (4).

9. Power steering system according to one of the preceding claims, **characterized in that** the wave spring assemblies (18, 20) each have two wave springs (128, 138, 130, 140), while an elastic intermediate layer (118, 120) is arranged between the two wave springs.

10. Power steering system according to one of the preceding Claims 1 to 8, **characterized in that** the wave spring assemblies (18, 20) each have a wave spring (128, 130, 168) and a ring (148), an elastic intermediate layer (118, 120) being arranged between the wave spring (128, 130) and the ring (148), and the wave spring (128, 30) bearing against the ring (148) at its low points (158).

11. Power steering system according to Claim 10, **characterized in that** the wave spring (168) has at least one radially continuous cutout (178) at its low points (158).

## Revendications

1. Servodirection, notamment pour un véhicule automobile, avec un servomoteur entraînant un composant pouvant être déplacé dans le plan axial via un écrou (1) disposé dans un palier (4) de façon à pouvoir tourner dans un cadre (9, 10), l'écrou (1) étant en prise avec une broche filetée (2) réalisée au niveau du composant et étant maintenu contre le cadre (9, 10) via le palier (4), dans la direction axiale à l'aide d'éléments de ressort (18, 20), de façon élastique par rapport au cadre (9, 10), ainsi que dans la direction radiale le long d'une surface de contact (8, 30) périphérique étroite, **caractérisée en ce que** les éléments de ressort (18, 20) sont réalisés sous la forme de paquets de rondelles ondulées (18, 20), les paquets de rondelles ondulées (18, 20) comportant respectivement au moins deux éléments parmi lesquels au moins un élément est une rondelle ondulée (128, 130), une couche intermédiaire (118, 120) élastique étant respectivement disposée entre les au moins deux éléments.

2. Servodirection selon la revendication 1, **caractérisée en ce qu'**un disque de démarrage (19, 21) est respectivement inséré entre chacun des paquets de rondelles ondulées (18, 20) et le cadre (9, 10).

3. Servodirection selon l'une quelconque des revendications précédentes, **caractérisée en ce que** les paquets de rondelles ondulées (18, 20) sont respectivement disposés entre une bague extérieure (7) du palier (4) et un collet annulaire (22, 23, 26) du cadre (9, 10).

4. Servodirection selon la revendication 3, **caractérisée en ce que** le cadre comprend un carter (9) et un couvercle de carter (10), un des collets annulaires (23) étant réalisé au niveau du couvercle de carter (10) et l'autre collet annulaire (22, 26) étant réalisé au niveau du carter (9) ou au niveau d'une douille (27) pouvant être introduite dans le carter (9) .

5. Servodirection selon la revendication 4, **caractérisée en ce que** la douille (27) comporte également, outre le collet annulaire (26), un siège de palier (8) maintenant la bague extérieure de palier (7) du palier (4) contre une surface périphérique extérieure (15).

6. Servodirection selon l'une quelconque des revendications précédentes, **caractérisée en ce que** le siège de palier (8) forme avec la bague extérieure de palier (7) une surface de butée elle-même plus étroite, dans la direction axiale (A) de l'agencement, que la bague extérieure de palier (7).

7. Servodirection selon la revendication 6, **caractérisée en ce que** la surface de butée est réalisée sous la forme d'une nervure (24) périphérique.

8. Servodirection selon la revendication 6, **caractérisée en ce que** la surface de butée est réalisée en forme de ligne sous la forme d'une zone partielle (30) d'une surface (29) convexe, orientée vers l'intérieur par rapport au palier (4), du siège de palier (8).

9. Servodirection selon l'une quelconque des revendications précédentes, **caractérisée en ce que** les paquets de rondelles ondulées (18, 20) comportent respectivement deux rondelles ondulées (128, 138, 130, 140), une couche intermédiaire (118, 120) élastique étant disposée entre les deux rondelles ondulées.

10. Servodirection selon l'une quelconque des revendications 1 à 8, **caractérisée en ce que** les paquets de rondelles ondulées (18, 20) comportent respectivement une rondelle ondulée (128, 130, 168) et une bague (148), une couche intermédiaire élastique (118, 120) étant disposée entre la rondelle ondulée (128, 130) et la bague (148) et la rondelle ondulée (128, 130) butant avec ses points bas (158) avec la bague (148).

11. Servodirection selon la revendication 10, **caractérisée en ce que** la rondelle ondulée (168) comporte dans ses points bas (158) au moins un détouré (178) s'interposant dans le plan radial.
